# EUROPEAN PATENT SPECIFICATION

(11) **EP 1 814 382 B1**
(45) Date of publication and mention of the grant of the patent: **13.08.2008**
(21) Application number: 05857771.9
(22) Date of filing: 07.11.2005
(51) Int. Cl.: A01K 31/00, A01K 45/00

(54) **METHOD FOR SEPARATING CHICKS FROM THE WASTE OF THE BROOD PROCESS AND DEVICE USED THEREBY.**
VERFAHREN ZUM SEPARIEREN DER KÜKEN VOM ABFALL DES BRUTPROZESSES UND DABEI VERWENDETE VORRICHTUNG
PROCEDE PERMETTANT DE SEPARER LES POUSSINS DES RESTES DE LA COUVEE ET DISPOSITIF CORRESPONDANT

(30) Priority: 08.11.2004 BE 200400546
(43) Date of publication of application: 08.08.2007
(73) Proprietor: Innovatec B.V., 4122 GE Zijderveld (NL)
(72) Inventor: VAN DE LOO, Philip, Karel, Marie-Louise, 4132 GE Viaenen (NL)
(74) Representative: Donné, Eddy
(86) International application number: PCT/IB2005/004041
(87) International publication number: WO 2006/114664

(56) References cited:
- WO-A-94/15454
- DE-C1- 3 900 012
- FR-A- 2 589 371
- NL-A- 9 401 987

## Description

In hatcheries, chicks are hatched out in what are called incubators, after which they have to be separated from the waste which is present in said incubators, such as shell parts of the hatched eggs and possibly non-hatched eggs. This may be done using the method and means as disclosed in document NL-A-940-1987.

It is also known, in order to separate the chicks as mentioned above, to put the content of the incubators on a transport device which consists of several conveyor belts placed on top of one another which each consist of two parallel endless chains, in between which, at a certain mutual distance, freely rotating rollers are provided.

The mutual distance between the different rollers of a conveyor belt hereby varies between the different conveyor belts placed on top of one another, whereby this distance for the top conveyor belt is somewhat larger than the dimensions of a chick, but smaller than the dimensions of a non-hatched egg, and whereby the mutual distance between the rollers of the underlying conveyor belt is smaller than the dimensions of the chicks, but larger than the dimensions of small shell parts and, for example, down feathers.

When putting the content of the above-mentioned incubators on the above-described transport device, the chicks and the small waste fall between the rollers of the top conveyor belt, upon which the non-hatched eggs and the larger shell parts are retained.

In the end, the chicks hereby remain on the underlying conveyor belt, whereas the small waste ends up between the rollers of this underlying conveyor belt on a third conveyor belt and is carried off.

Thus, chiefly the chicks alone and a fraction of the waste having dimensions in the same order of magnitude as chicks stay behind on the underlying conveyor belt.

In order to be able to further separate the chicks from the above-mentioned remaining fraction of waste, it is known to provide a suction device above the underlying conveyor belt and next to the top conveyor belt, which makes it possible to selectively suck up the remaining waste on the basis of the difference in aerodynamical qualities between chicks and shell parts, against the gravitational force.

A disadvantage of this known method is that the chicks are subject to relatively much stress when they are put on the known transport device and then fall between the rollers of the top conveyor belt.

Another disadvantage of this known method is that the non-hatched eggs may break when they fall on the top conveyor belt, whereby the content of these non-hatched eggs ends up on the chicks on the underlying conveyor belt, which further increases the chicks' stress, and as a result of which they are soiled and consequently lose some visual quality.

Moreover, when breaking non-hatched eggs, the rollers of the top conveyor belt are soiled, such that the down of the chicks who subsequently fall between the rollers is soiled as well.

Another disadvantage, in case so-called gas eggs are present between the non-hatched eggs, is that the microorganisms, including among others viruses, bacteria and fungi, which have contaminated these eggs, are release when breaking the gas eggs and are subsequently spread over the chicks on the different conveyor belts, as a result of which these chicks may possibly be contaminated.

Another disadvantage of this known method concerns the application of the above-mentioned suction device, which is difficult to set with great accuracy due to the small difference in aerodynamical qualities between the chicks and the shell parts.

When the suction force of this suction device is set too low, not all the shell parts are sucked up, such that the separation is incomplete.

When the suction force is set too high, however, a part of the chicks will be sucked up as well, which results in production losses.

Another disadvantage of the application of the above-mentioned suction device is that there is a continuous, relatively large air flow from inside the space in which the separation device is erected to the outside, as a result of which the overpressure which is built up in this space, as a protection against contamination by bacteria and the like, is difficult to maintain.

Moreover, this air flow may also be disadvantageous to the heating cost of the hatchery, as the exhaust air from the hatchery, especially in winter, is warmer than the ambient temperature.

Another disadvantage of the use of this suction device is that a relatively strong air flow is required to suck up shell parts against the gravitational force, which air flow may possibly be the cause of the chicks suffering from hypothermia.

Another disadvantage of applying such a known suction device is that the sucked-in air must be purified from the shell parts that are carried off along with it, in order to prevent the air in the hatchery or in the vicinity of the hatchery from being polluted.

The present invention aims to remedy one or several of the above-mentioned and other disadvantages.

To this end, the invention concerns a method for separating chicks from the waste of the brood process, which method comprises at least one separation phase for separating the chicks from non-hatched eggs, which operational phase consists of carrying the chicks from one conveyor belt to another conveyor belt by means of an upward directed air flow, whereby the above-mentioned conveyor belts are situated one after the other at a mutual distance and whereby the above-mentioned distance is larger than or equal to the dimensions of a non-hatched egg which must fall between the above-mentioned conveyor belts, whereby shell parts, down and/or dust particles from the chicks (2) are separated by making the chicks (2) and the waste (3) fall from one far end of one conveyor belt (7, 9) onto the starting point of an underlying conveyor belt (8, 30), and by providing a horizontal or practically horizontal air flow onto the chicks (2) and the waste (3) on the underlying conveyor belt (8, 30), such that the shell parts, the down and any possible dust particles are blown off.

An advantage of the present invention is that the chicks, during the separation of the non-hatched eggs, are kept at the same or a higher level than these non-hatched eggs, such that their down cannot be soiled with the content of broken, non-hatched eggs, as a result of which these chicks preserve their visual quality.

The method according to the invention preferably also comprises an operation phase which makes it possible to separate shell parts and other small waste such as down from the incubators from the chicks, which operation phase consists of blowing off this small waste in a horizontal or practically horizontal direction.

In order to carry out this operation phase as efficiently as possible, the chicks and the waste are put on the topmost belt of two overlapping conveyor belts, whereby the chicks and the waste fall onto the starting point of the bottom conveyor belt at the end of said top conveyor belt, upon which an air flow is created which is preferably opposite to the direction of movement of said bottom conveyor belt.

The above-mentioned air flow, which is preferably small and constant, blows off the above-mentioned waste from between the chicks, between the overlapping conveyor belts and over the starting point of the bottom conveyor belt which carries along the chicks.

Such a method results in a relatively good separative power, especially if the shell parts can be kept in the constant air flow, for example by providing side walls on both sides of the lower conveyor belt, as a result of which the waste seems to blow through a tunnel, which is formed of the lower conveyor belt, the top conveyor belt and the above-mentioned side walls.

It is possible to prevent that the chicks are blown along by using a conveyor belt with an open structure, on which the chicks have a good grip.

Another advantage of this method according to the invention is that the waste is blown away and can subsequently be separated from the air flow under the influence of the gravitational force and collected in a chute or the like, whereby the air flow can be fed with air from the space in which the device according to the invention is erected, such that the air pressure in this space is hardly or not disturbed, and such that no heat is lost by extracting air from this space.

Another advantage of this method is that a relatively small air flow is sufficient to blow off waste such as down and shells parts, especially compared to an air flow that is required to suck up such waste against the gravitational force.

For the reason mentioned above, this operation phase can be carried out in a manner which is more advantageous from an energetic point of view, and it offers the additional advantage that the air flow, to which the chicks are exposed, does not expose the chicks to hypothermia, who as a consequence will be less stressed.

The present invention also concerns a device which can be used for separating chicks from the waste of a brood process by means of the above-described method according to the invention, which device mainly consists of at least one separation zone which is formed of an open space between two conveyor belts placed one after the other at a certain distance, whereby the above-mentioned distance is of the same order of magnitude as or larger than non-hatched eggs and comprises means which make it possible to provide an upward directed air flow through the above-mentioned separation zone, whereby the device comprises at least two separation zones (12, 22, 31), a first separation zone (12) which is formed of a space between two overlapping conveyor belts {7,8; 9,30) situated at a vertical distance B from one another, and which is provided with means which make it possible to create a horizontal or practically horizontal air flow through this separation zone (12, 31); and a second separation zone (22) which is formed of space between the above-mentioned conveyor belts (8,9) situated one after the other at a distance A, which is provided with the above-mentioned means for creating an upward air flow through this second separation zone (22).

In order to better explain the characteristics of the present invention, the following method and device for separating chicks from the waste of a brood process according to the invention are described as an example only without being limitative in any way, with reference to the accompanying figures, in which:
figure 1 schematically represents a device according to the invention;
figures 2 and 3 represent the parts indicated in figure 1 by F2 and F3 respectively to a larger scale;
figure 4 schematically represents a device according to the invention in perspective;
figures 5 and 6 represents variants of figure 1.

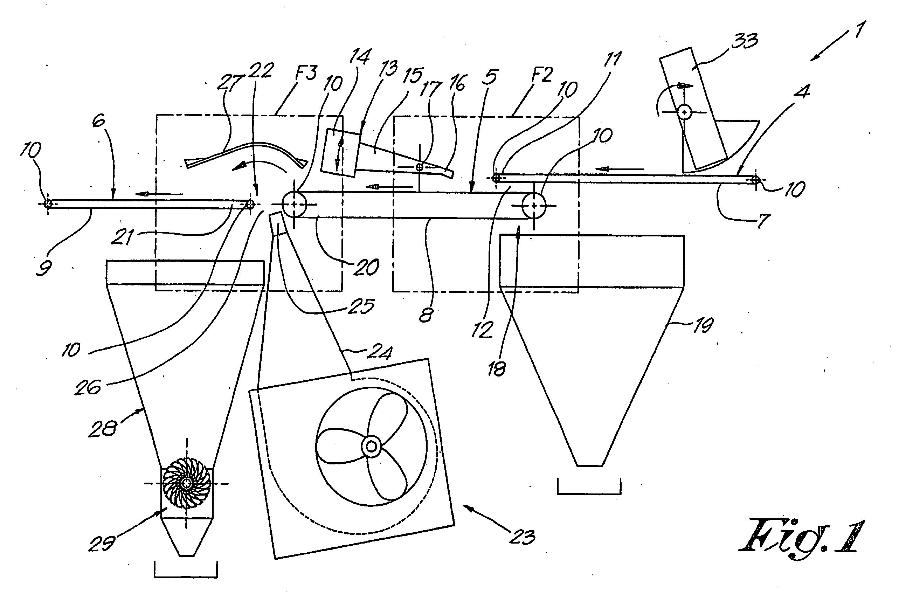

Figure 1 represents a device 1 for separating chicks 2 from the waste 3 of the brood process, which device mainly consists of three successive conveying systems 4, 5 and 6 and of means for creating an air flow between the above-mentioned conveying systems 4 to 6.

The different conveying systems 4, 5 and 6 in this case each consist of an endless conveyor belt 7, 8 and 9 which is guided over rotating rollers 10 and of which each time one roller 10 is provided with a suitable drive which is not represented in the figures.

In this case, the conveyor belts 7 to 9 are placed one after the other in the conveying direction, whereby the first conveyor belt 7 is situated at a somewhat higher level than the second one, and preferably partly overlaps this second conveyor belt 8, and whereby the third conveyor belt 9 is situated in the extension of the second conveyor belt 8 at a distance A thereof.

The above-mentioned conveyor belts 7 to 9 preferably have an open structure, whereby the openings in these conveyor belts 7 to 9 are at least smaller than the feet of the chicks 2.

The distance B between the top sides of the first conveyor belt 7 and the second conveyor belt 8, at the far end 11 of the first conveying system 4, is preferably in the order of magnitude of 165 mm, whereby a free space is provided between both conveyor belts 7 and 8 which forms a first separation zone 12.

Naturally, this distance B is preferably minimized as much as possible, but the above-mentioned first separation zone 12 must always be larger than the shell parts of hatched eggs, for which it must be possible to be carried off through this separation zone 12.

The above-mentioned means for creating an air flow through this first separation zone 12 is preferably formed by means of at least one blower 13 which, in this case, is erected above the second conveyor belt 8.

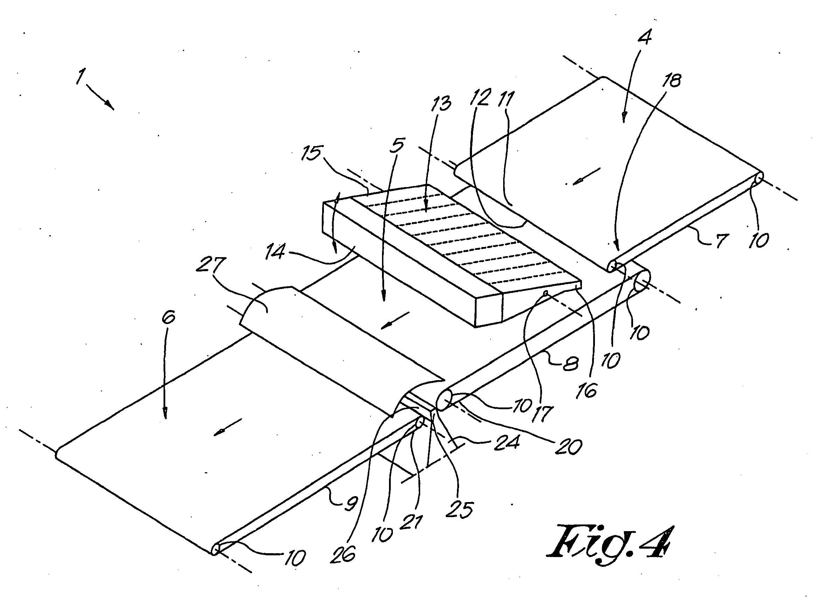

This blower 13 consists of a fan 14 or the like with a blow nozzle 15 which is directed in a horizontal or practically horizontal direction, and which narrows in the vertical direction towards the outlet 16 of the blower 13, and which widens in the horizontal direction, such that the outlet 16 of the blow nozzle 15 has a width which, as represented in figure 4, corresponds more or less to the width of the second conveyor belt 8.

The blow nozzle 15 of the above-mentioned blower 13 is preferably situated at a minimal height of 50 mm above the second conveyor belt 8 and at a horizontal distance of some 250 mm from the first conveyor belt 7.

The blower 13 is preferably also of the type which is capable of creating a constant, uniform air flow, and it is provided with means which make it possible to direct the blow nozzle 15 towards the above-mentioned separation zone 12 between the first conveyor belt 7 and the second conveyor belt 8, which means in this case make it possible to tilt the blow nozzle 15 around an axis of rotation 17.

Naturally, this blower 13 can also be provided with means which are not represented in the figures and which make it possible to position the blow nozzle 15 in a horizontal and vertical direction in relation to the above-mentioned first separation zone 12.

Under the overlapped part 18 of the second conveyor belt 8 is preferably provided a receptacle, which in this case is made in the shape of a funnel 19.

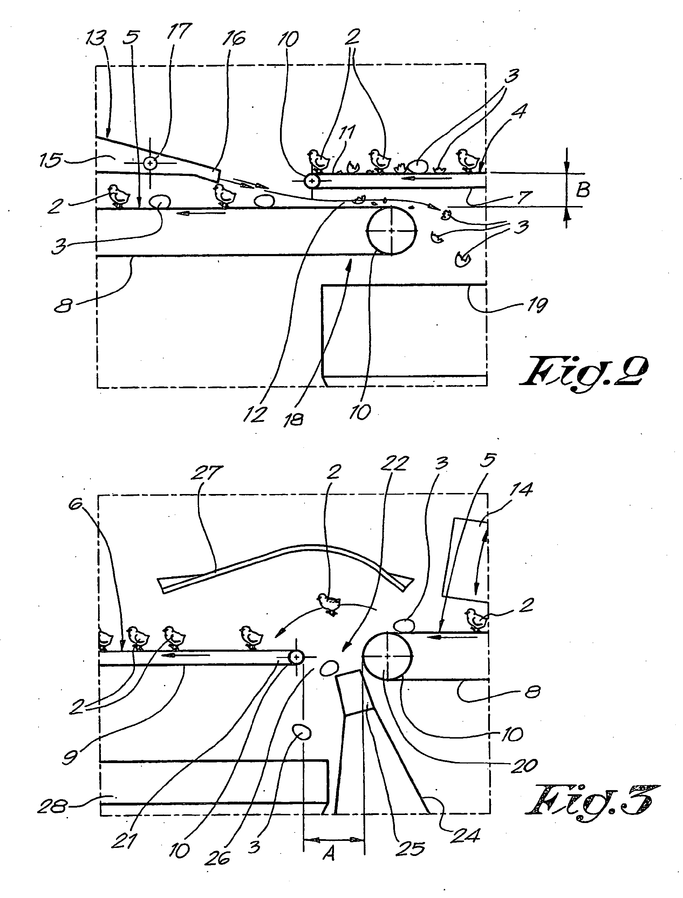

As is represented in figure 3, a free space is provided between the far ends 20 and 21 of the second and the third belt 8, 9 respectively, which are directed towards each other, which free space forms a second separation zone 22.

The top of the second conveyor belt 8 is preferably situated at a somewhat higher level than the top of the third conveyor belt 9, for example at a height of some 20 mm above the top of the third conveyor belt 9, whereas the horizontal distance A between both conveyor belts 8 and 9 is preferably in the order of magnitude of 80 to 110 mm.

The means for creating an air flow through this separation zone 22 consists of a blower 23 and a blow nozzle 24 which narrows towards its outlet 25 so as to form a narrow, elongated blow nozzle 24 having a length, measured at right angles to the longitudinal direction of the conveyor belt, which is preferably 1 to 20% longer than the width of the second conveyor belt 8 and which is considerably narrower than they distance A between both conveyor belts 8 and 9 concerned.

The outlet 25 of the blow nozzle 24 is hereby directed upward and is preferably oriented somewhat slantingly in the conveying direction.

The blow nozzle 24 of the blower 23 can preferably also be oriented in a horizontal as well as a vertical direction, for example by means of a small, hinge-mounted, tubular element which can be provided over the outlet 25 of the blow nozzle 24 in a fitting manner and which is not represented in the figures.

Between the above-mentioned blow nozzle 24 and the far end concerned of the third conveyor belt 9 is provided a passage 26 which is preferably at least larger than the dimensions of hatching eggs.

Above the second separation zone 22, in particular above the far ends 20 and 21 of the second and third conveyor belts 8 and 9 is provided a hood-shaped guide 27 which can be made for example of a bent grid or plate which extends at some 80 to 90 mm above the far ends 20 and 21 of the second and third conveyor belts 8 and 9.

Further, under the second separation zone 22, next to the blower 23 is provided a second funnel 28, which in this case contains a rotating grinding device 29.

The working of the above-described device according to the invention is simple and as follows.

In order to separate chicks 2 from the waste 3 of the brood process, the chicks 2 and the waste 3 are provided on the first conveyor belt 7, whereby they are carried by this conveyor belt 7 to the first separation zone 12.

At the end 11 of the first conveyor belt 7, the chicks 2 and the waste 3 fall onto the second conveyor belt 8, whereby a large part of the waste 3 which is somewhat lighter than the chicks 2 and which has other aerodynamic qualities, such as for example down feathers and shell parts, are blown off by the constant and relatively small and uniform air flow in a direction opposite to the conveying direction of the second conveyor belt 8, whereby this light waste rolls over the second conveyor belt 8 and is carried off to the above-mentioned funnel 19.

Thus, only the chicks 2 and the relatively heavy waste 3, such as non-hatched eggs, chiefly stay on the second conveyor belt 8, which chicks 2 and which waste 3 are conveyed under the first blower 13 to the second separation zone 22.

At the far end 20 of the second conveyor belt 8, the chicks 2 and the heavy waste 3 fall from this conveyor belt 8, whereby the chicks 2 are almost immediately pushed up in the direction of the third conveyor belt 9 by means of the upward directed air flow from the blower 23.

The remaining waste 3, which is somewhat heavier or catches less wind than the chicks 2, is not pushed up by the above-mentioned constant air flow, as a result of which said waste 3 ends up in the above-mentioned funnel 28 through the above-mentioned passage 26 between the blow nozzle 24 of the blower 23 and the far end 21 of the third conveyor belt 9. Consequently, the chicks 2 which end up on the third conveyor belt 9 are separated from the waste 3 of the brood process.

An advantage of this method is that the chicks 2 always stay at the same level or above the level of the waste 3, such that they cannot be soiled and are subjected to relatively little stress.

Moreover, relatively small air flows and relatively small drop heights are sufficient for the above-described method, as a result of which the chicks 2 maintain their body temperature and are subjected to relatively little stress, such that the chick mortality during the separation is relatively small.

It should be noted that the above-described order of the different separation phases or operation phases that are applied can be adjusted depending on the need of the user or depending on the content of the incubators.

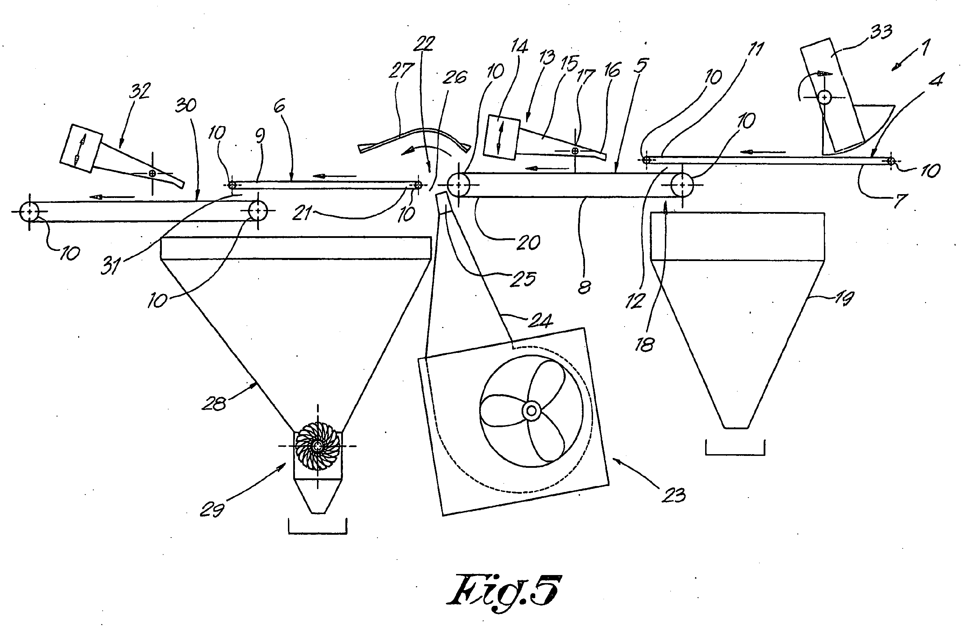

Naturally, one or several separation phases can be added to the above-described device according to the invention, as is represented in figure 5.

Figure 5 represents a variant whereby, at the end of the third conveyor belt 9, is provided a fourth conveyor belt 30, situated at a somewhat lower level than the third conveyor belt 9 and which is partly overlapped by this third conveyor belt 9, whereby between both conveyor belts 9 and 30 is provided a free space forming a third separation zone 31, towards which is again directed a blower 32.

Figure 5 also represents an incubator 33 in which the chicks 2 can be hatched, after which the content of this incubator 33, in particular the chicks 2 and the waste of the brood process, can be put in a simple and known manner onto the first conveyor belt 7.

Naturally, these means for creating an air flow can also be made according to variants, whereby for example the blowers 13 and 32 which are provided on the first and third separation zone 12, 31 respectively, are replaced by two blowers which are erected next to each other.

Moreover, it is not necessary to direct the blowers 13 and 32 in a direction opposite to the conveying direction. Also providing an air flow across the conveying direction makes it possible to separate the chicks 2 and a part of the waste 3 from each other.

It is also possible to provide the different conveying systems 4 to 6 crosswise in relation to one another.

Further, it should be noted that under each of the above-mentioned separation zones 12, 22 and 31 is preferably provided a separate funnel, which is advantageous in that the shell parts and the down can be selectively collected during the separation process in relation to the non-hatched eggs.

Finally, it should be noted that it is possible to provide a suction device, above the second separation zone, in addition to the hood-shaped guide 27, which makes it possible to suck up remaining down and shell parts which are pushed up through the blower 23.

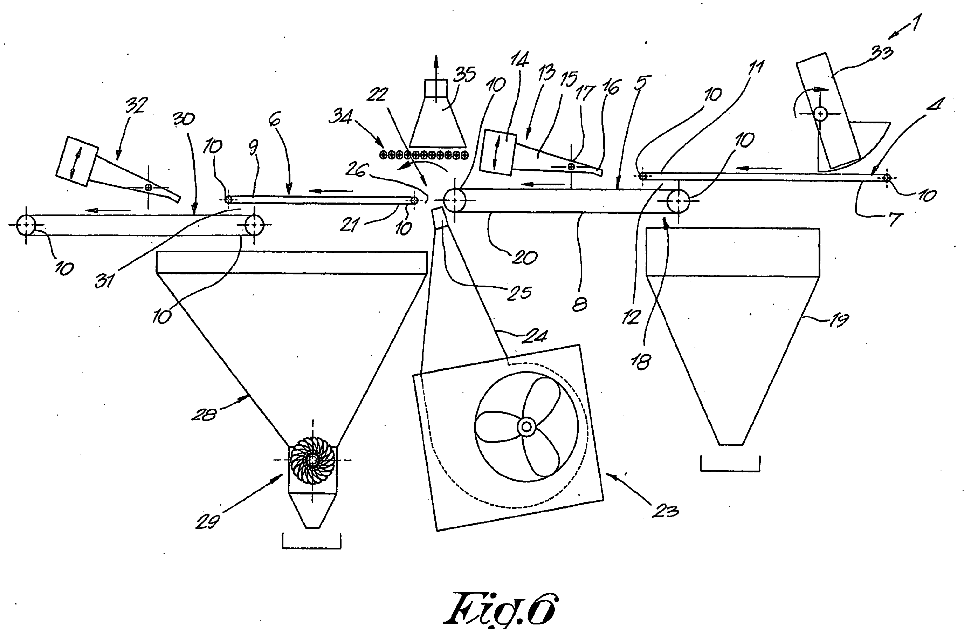

Figure 6 represents a last variant in which the above-mentioned hood-shaped guide 27 is replaced by a conveyor belt 34 with an open structure through which chicks 2 cannot be conveyed.

In this case, the conveyor belt 34, also called grate bar belt, consists of a number of separate bars which are provided across the conveying direction between two drive chains. The bars are placed at a short mutual distance, such that the chicks 2 cannot pass between two successive bars.

Above the conveyor belt 34 is optionally provided a suction device 35 which is designed to create an upward air flow at the second separation zone 22 which makes it possible to suck up down and other light waste and which makes it possible to suck chicks against the bottom of the above-mentioned conveyor belt 34.

The conveyor belt 34 is provided with a drive which makes it possible to drive the conveyor belt in a direction in which the chicks 2 who are pressed against the bars at the bottom are moved in a direction from the above-mentioned second conveyor belt 8 towards the third conveyor belt 9.

The working of this variant differs from the above-described embodiments in that the conveyance of the chicks 2 from the second conveyor belt 8 towards the third conveyor belt 9 not only takes place by means of the upward directed air flow of the above-mentioned blower 32, but is moreover promoted by the rotation of the bars of the conveyor belt 34 and by the suction force of the suction device 35 which makes it possible to suck the chicks 2 against the bottom of the conveyor belt 34.

By making the conveyor belt 34 at least as long as the suction opening of the suction device 35, chicks 2 are prevented from being sucked up by the suction device 35.

As soon as the chicks have been conveyed past the suction opening of the suction device 35, they will fall on the third conveyor belt 9 under the influence of the gravitational force, whereas non-hatched eggs will fall in between both conveyor belts 8 and 9 and down will be sucked up through the conveyor belt 34.

The present invention is by no means restricted to the embodiments given as an example; on the contrary, such a method and device for separating chicks from waste of the brood process can be made according to different variants while still remaining within the scope of the invention as defined in the appended claims.

## Claims

1. Method for separating chicks from the waste of the brood process, which method comprises at least one separation phase for separating the chicks (2) from non-hatched eggs, **characterised in that** this separation phase consists of providing an upward directed air flow through a separation zone between two conveyor belts which are situated one after the other at a distance A, which air flow makes it possible to carry the chicks (2) from one conveyor belt (8) to another conveyor belt (9), whereas the non-hatched eggs fall between the above-mentioned conveyor belts (8-9), whereby shell parts, down and/or dust particles from the chicks (2) are separated by making the chicks (2) and the waste (3) fall from one far end of one conveyor belt (7, 9) onto the starting point of an underlying conveyor belt (8, 30), and by providing a horizontal or practically horizontal air flow onto the chicks (2) and the waste (3) on the underlying conveyor belt (8, 30), such that the shell parts, the down and any possible dust particles are blown off.

2. Method according to claim 1, **characterised in that** it consists in successively separating shell parts; separating the non-hatched eggs.

3. Method according to claim 1, **characterised in that** the separated waste (3) is collected in one or several funnels (19, 28).

4. Method according to claim 3, **characterised in that** for every separation phase is provided a separate funnel (19, 28).

5. Method according to claim 1,**characterised in that** the above-mentioned air flows are relatively constant and uniform.

6. Device which can be used for separating chicks from waste by means of a method according to one or several of the preceding claims, which device mainly consists of at least two conveyor belts (8-9) in between which is defined a separation zone (22), **characterised in that** the above-mentioned conveyor belts (8-9) are situated one after the other at a mutual distance A, which distance A is larger than or equal to the dimensions of non-hatched eggs, and **in that** means are provided which make it possible to create an upward directed air flow through the above-mentioned separation zone (22), whereby the device comprises at least two separation zones (12, 22, 31), a first separation zone (12) which is formed of a space between two overlapping conveyor belts {7,8; 9,30) situated at a vertical distance B from one another, and which is provided with means which make it possible to create a horizontal or practically horizontal air flow through this separation zone (12, 31); and a second separation zone (22) which is formed of space between the above-mentioned conveyor belts (8,9) situated one after the other at a distance A, which is provided with the above-mentioned means for creating an upward air flow through this second separation zone (22).

7. Device according to claim 6, **characterised in that** above the above-mentioned separation zone (22) is provided a hood-shaped guide (27).

8. Device according to claim 6, **characterised in that** above the above-mentioned separation zone (22) is provided a conveyor belt (34) with an open structure.

9. Device according to claim 8, **characterised in that** the above-mentioned conveyor belt (34) is driven above the separation zone (22), such that it allows for a movement, at its bottom, from the above-mentioned second conveyor belt (8) in the direction of the third conveyor belt (9).

10. Device according to claim 6, **characterised in that** above the above-mentioned separation zone (22) a suction device (35) is provided.

11. Device according to claim 6, **characterised in that** the rear conveyor belt (9) of both above-mentioned conveyor belts (8-9) is situated at a lower level than the front conveyor belt (8).

12. Device according to claim 6, **characterised in that** the above-mentioned means for creating an air flow through the above-mentioned separation zone (22) consist of a blower (23) with a blow nozzle (24).

13. Device according to claim 12, **characterised in that** the above-mentioned blow nozzle (24) is positioned practically against the front conveyor belt (8), between both above-mentioned conveyor belts (8, 9).

14. Device according to claim 13, **characterised in that** the above-mentioned blow nozzle (24) is directed slantingly away from the front conveyor belt (8).

15. Device according to claim 12, **characterised in that** the length of the above-mentioned blow nozzle (24) is at least 1 to 20% longer than the width of the front conveyor belt (8) concerned.

16. Device according to claim 6, **characterised in that** it successively comprises the above-mentioned first separation zone (12) and the above-mentioned second separation zone (22).

17. Device according to claim 6, **characterised in that** the above-mentioned conveyor belts (7, 8, 9, 30) have an open structure, whereby the openings in these conveyor belts (7, 8, 9, 30) are smaller than the legs of the chicks (2) to be separated.

18. Device according to claim 6, **characterised in that** the above-mentioned means for creating an air flow through the above-mentioned first separation zone consist of a blower (13) with a blow nozzle (15) which is positioned horizontally or practically horizontally, and which is directed towards the separation zone (12) concerned.

19. Device according to claim 18, **characterised in that** the above-mentioned blower (13) in the first separation zone (12) is provided with means which make it possible to tilt said blower (13) and to move it horizontally or vertically.

20. Device according to claim 6, **characterised in that** under each of the above-mentioned separation zones (12, 22) is provided a separate funnel (19, 28).

21. Device according to claim 6, **characterised in that** it is provided with a third separation zone (31) of the same type as the first separation zone (12).

## Patentansprüche

1. Verfahren zum Separieren der Küken vom Abfall des Brutprozesses, welches Verfahren mindestens eine Separationsphase zum Separieren der Küken (2) von nicht ausgebrüteten Eiern umfasst, **dadurch gekennzeichnet, dass** diese Separationsphase aus dem Vorsehen eines aufwärts gerichteten Luftstroms durch eine Separationszone zwischen zwei Förderbändern besteht, die nacheinander in einem Abstand A angeordnet sind, welcher Luftstrom es ermöglicht, die Küken (2) von einem Förderband (8) zu einem anderen Förderband (9) zu befördern, während die nicht ausgebrüteten Eier zwischen die oben erwähnten Förderbänder (8-9) fallen, wobei Schalenteile, Daunen und/oder Staubteilchen von den Küken (2) separiert werden, indem man die Küken (2) und den Abfall (3) von dem einem Ende eines Förderbandes (7, 9) auf den Anfangspunkt eines darunterliegenden Förderbandes (8, 30) fallen lässt, und durch Vorsehen eines horizontalen oder nahezu horizontalen Luftstroms auf die Küken (2) und den Abfall (3) auf dem darunterliegenden Förderband (8, 30), sodass die Schalenteile, die Daunen und eventuelle Staubteilchen weggeblasen werden.

2. Verfahren nach Anspruch 1, **dadurch gekennzeichnet, dass** es aus dem nacheinander Separieren von Schalenteilen; dem Separieren der nicht ausgebrüteten Eier besteht.

3. Verfahren nach Anspruch 1, **dadurch gekennzeichnet, dass** der separierte Abfall (3) in einem oder mehreren Trichtern (19, 28) aufgefangen wird.

4. Verfahren nach Anspruch 3, **dadurch gekennzeichnet, dass** für jede Separationsphase ein separater Trichter (19, 28) vorgesehen wird.

5. Verfahren nach Anspruch 1, **dadurch gekennzeichnet, dass** die vorgenannten Luftströme relativ konstant und gleichförmig sind.

6. Vorrichtung, die zum Separieren der Küken von Abfall mit Hilfe eines Verfahrens nach einem oder mehreren der vorgenannten Ansprüche angewendet werden kann, welche Vorrichtung im Wesentlichen aus mindestens zwei Förderbändern (8-9) besteht, zwischen denen eine Separationszone (22) definiert ist, **dadurch gekennzeichnet, dass** die vorgenannten Förderbänder (8-9) nacheinander in einem gegenseitigen Abstand A angeordnet sind, welcher Abstand A größer oder gleich den Abmessungen nicht ausgebrüteter Eier ist, und dass Mittel vorgesehen sind, die es ermöglichen, einen aufwärts gerichteten Luftstrom durch die vorgenannte Separationszone (22) zu erzeugen, wobei die Vorrichtung mindestens zwei Separationszonen (12, 22, 31) umfasst, eine erste Separationszone (12), die aus einem Raum zwischen zwei überlappenden Förderbändern (7,8; 9,30) gebildet ist, die sich in einem vertikalen Abstand B zueinander befinden, und die mit Mitteln versehen ist, die es ermöglichen, einen horizontalen oder praktisch horizontalen Luftstrom durch diese Separationszone (12, 31) zu erzeugen; und eine zweite Separationszone (22), die durch Raum zwischen den nacheinander in einem Abstand A angeordneten vorgenannten Förderbändern (8,9) gebildet wird, welche mit den vorgenannten Mitteln zur Erzeugung eines aufwärts gerichteten Luftstroms durch diese zweite Separationszone (22) versehen ist.

7. Vorrichtung nach Anspruch 6, **dadurch gekennzeichnet, dass** über der vorgenannten Separationszone (22) eine haubenförmige Führung (27) vorgesehen ist.

8. Vorrichtung nach Anspruch 6, **dadurch gekennzeichnet, dass** über der vorgenannten Separationszone (22) ein Förderband (34) mit einer offenen Struktur vorgesehen ist.

9. Vorrichtung nach Anspruch 8, **dadurch gekennzeichnet, dass** das vorgenannte Förderband (34) über der Separationszone (22) angetrieben wird, sodass es an seiner Unterseite eine Bewegung von dem vorgenannten zweiten Förderband (8) in die Richtung des dritten Förderbandes (9) gestattet.

10. Vorrichtung nach Anspruch 6, **dadurch gekennzeichnet, dass** über der vorgenannten Separationszone (22) eine Ansaugvorrichtung (35) vorgesehen ist.

11. Vorrichtung nach Anspruch 6, **dadurch gekennzeichnet, dass** das hintere Förderband (9) der beiden vorgenannten Förderbänder (8-9) sich auf einem niedrigeren Niveau befindet als das vordere Förderband (8).

12. Vorrichtung nach Anspruch 6, **dadurch gekennzeichnet, dass** die vorgenannten Mittel zur Erzeugung eines Luftstroms durch die vorgenannte Separationszone (22) aus einem Gebläse (23) mit einer Blasdüse (24) bestehen.

13. Vorrichtung nach Anspruch 12, **dadurch gekennzeichnet, dass** die vorgenannte Blasdüse (24) praktisch gegen das vordere Förderband (8), zwischen den beiden vorgenannten Förderbändern (8, 9), positioniert ist.

14. Vorrichtung nach Anspruch 13, **dadurch gekennzeichnet, dass** die vorgenannte Blasdüse (24) schräg von dem vorderen Förderband (8) weg gerichtet ist.

15. Vorrichtung nach Anspruch 12, **dadurch gekennzeichnet, dass** die Länge der vorgenannten Blasdüse (24) mindestens 1 bis 20% länger als die Breite des betreffenden vorderen Förderbandes (8) ist.

16. Vorrichtung nach Anspruch 6, **dadurch gekennzeichnet, dass** sie nacheinander die vorgenannte erste Separationszone (12) und die vorgenannte zweite Separationszone (22) umfasst.

17. Vorrichtung nach Anspruch 6, **dadurch gekennzeichnet, dass** die vorgenannten Förderbänder (7, 8, 9, 30) eine offene Struktur aufweisen, wobei die Öffnungen in diesen Förderbändern (7, 8, 9, 30) kleiner als die Beine der zu separierenden Küken (2) sind.

18. Vorrichtung nach Anspruch 6, **dadurch gekennzeichnet, dass** die vorgenannten Mittel zur Erzeugung eines Luftstroms durch die vorgenannte erste Separationszone aus einem Gebläse (13) mit einer Blasdüse (15) bestehen, die horizontal oder praktisch horizontal gerichtet ist und die zu der betreffenden Separationszone (12) gerichtet ist.

19. Vorrichtung nach Anspruch 18, **dadurch gekennzeichnet, dass** das vorgenannte Gebläse (13) in der ersten Separationszone (12) mit Mitteln versehen ist, die es ermöglichen, dieses Gebläse (13) zu kippen und es horizontal oder vertikal zu bewegen.

20. Vorrichtung nach Anspruch 6, **dadurch gekennzeichnet, dass** unter jeder der vorgenannten Separationszonen (12, 22) ein separater Trichter (19, 28) vorgesehen ist.

21. Vorrichtung nach Anspruch 6, **dadurch gekennzeichnet, dass** sie mit einer dritten Separationszone (31) vom gleichen Typ wie die erste Separationszone (12) versehen ist.

## Revendications

1. Procédé pour séparer des poussins des déchets du processus de couvée, ledit procédé comprenant au moins une phase de séparation pour séparer les poussins (2) des oeufs non éclos, **caractérisé en ce que** cette phase de séparation consiste à procurer un courant d'air orienté vers le haut à travers une zone de séparation ménagée entre deux courroies transporteuses qui sont disposées l'une derrière l'autre à une distance A, ledit courant d'air permettant de transporter les poussins (2) d'une courroie transporteuse (8) à une autre courroie transporteuse (9), tandis que les oeufs non éclos tombent entre les courroies transporteuses susmentionnées (8-9), procédé par lequel des parties de coquille, du duvet et/ou des particules de poussière provenant des poussins (2) sont séparés en faisant tomber les poussins (2) et les déchets (3) depuis une extrémité éloignée de la première courroie transporteuse (7, 9) jusque sur le point de départ d'une courroie transporteuse sous-jacente (8, 30) et en procurant un courant d'air horizontal ou pratiquement horizontal sur les poussins (2) et sur les déchets (3) sur la courroie transporteuse sous-jacente (9, 30) de telle sorte que les parties de coquille, le duvet et n'importe quelles particules de poussière éventuelle sont éliminés par soufflage.

2. Procédé selon la revendication 1 **caractérisé en ce qu'**il consiste à séparer successivement les parties de coquille et les oeufs non éclos.

3. Procédé selon la revendication 1, **caractérisé en ce que** les déchets séparés (3) sont récoltés dans un ou plusieurs entonnoirs (19, 28).

4. Procédé selon la revendication 3, **caractérisé en ce que**, pour chaque phase de séparation, on prévoit un entonnoir séparé (19, 28).

5. Procédé selon la revendication 1 **caractérisé en ce que** les courants d'air mentionnés ci-dessus sont relativement constants et uniformes.

6. Dispositif que l'on peut utiliser pour séparer des poussins de déchets au moyen d'un procédé selon une ou plusieurs des revendications précédentes, ledit dispositif étant constitué principalement par au moins deux courroies transporteuses (8-9) entre lesquelles est définie une zone de séparation (22), **caractérisé en ce que** les courroies transporteuses susmentionnées (8-9) sont situées l'une derrière l'autre à une distance réciproque A, ladite distance A étant supérieure ou égale aux dimensions des oeufs non éclos, et **en ce qu'**on prévoit des moyens qui permettent de créer un courant d'air orienté vers le haut à travers la zone de séparation susmentionnée (22), le dispositif comprenant au moins deux zones de séparation (12, 22, 31), une première zone de séparation (12) qui est formée d'un espace ménagé entre deux courroies transporteuses (7, 8 ; 9, 30) chevauchantes qui se situent à une distance verticale B l'une de l'autre et qui est équipée de moyens qui permettent de créer un courant d'air horizontal ou pratiquement horizontal à travers cette zone de séparation (12, 31) ; et une deuxième zone de séparation (22) qui est formée d'un espace ménagé entre les courroies transporteuses susmentionnées (8-9) qui sont situées l'une derrière l'autre à une distance A, ledit espace étant muni des moyens susmentionnés pour créer un courant d'air ascendant à travers cette deuxième zone de séparation (22).

7. Dispositif selon la revendication 6, **caractérisé en ce qu'**on prévoit, au-dessus de la zone de séparation susmentionnée (22), un guide (27) en forme de crochet.

8. Dispositif selon la revendication 6, **caractérisé en ce qu'**on prévoit, au-dessus de la zone de séparation susmentionnée (22), une courroie transporteuse (34) de structure ouverte.

9. Dispositif selon la revendication 8, **caractérisé en ce que** la courroie transporteuse susmentionnée (34) est entraînée au-dessus de la zone de séparation (22), de telle sorte qu'elle permet un mouvement, à sa base, à partir de la deuxième courroie transporteuse susmentionnée (8) dans la direction de la troisième courroie transporteuse (9).

10. Dispositif selon la revendication 6, **caractérisé en ce qu'**on prévoit, au-dessus de la zone de séparation susmentionnée (22), un dispositif d'aspiration (35).

11. Dispositif selon la revendication 6, **caractérisé en ce que** la courroie transporteuse arrière (9) parmi les deux courroies transporteuses susmentionnées (8-9) est située à un niveau inférieur à celui de la courroie transporteuse frontale (8).

12. Dispositif selon la revendication 6, **caractérisé en ce que** le moyen susmentionné pour créer un courant d'air à travers la zone de séparation susmentionnée (22) est constitué d'un ventilateur (23) comprenant une buse de soufflage (24).

13. Dispositif selon la revendication 12, **caractérisé en ce que** la buse de soufflage susmentionnée (24) est disposée pratiquement contre la courroie transporteuse frontale (8), entre les deux courroies transporteuses susmentionnées (8-9).

14. Dispositif selon la revendication 13, **caractérisé en ce que** la buse de soufflage susmentionné (24) s'écarte en inclinaison de la courroie transporteuse frontale (8).

15. Dispositif selon la revendication 12, **caractérisé en ce que** la longueur de la buse de soufflage susmentionnée (24) est supérieure à concurrence d'au moins 1 à 20 % à la largeur de la courroie transporteuse frontale (8) concernée.

16. Dispositif selon la revendication 6, **caractérisé en ce qu'**il comprend successivement la première zone de séparation susmentionnée (12) et la deuxième zone de séparation susmentionnée (22).

17. Dispositif selon la revendication 6, **caractérisé en ce que** les courroies transporteuses susmentionnées (7, 8, 9, 30) possèdent une structure ouverte, les ouvertures pratiquées dans les courroies transporteuses (7, 8, 9, 30) étant plus petites que les pattes des poussins (2) à séparer.

18. Dispositif selon la revendication 6, **caractérisé en ce que** le moyen susmentionné pour créer un courant d'air à travers la première zone de séparation mentionnée ci-dessus est constitué d'un ventilateur (13) comportant une buse de soufflage (15) qui est disposée à l'horizontale ou pratiquement à l'horizontale et qui est orientée en direction de la zone de séparation (12) concernée.

19. Dispositif selon la revendication 18, **caractérisé en ce que** le ventilateur susmentionné (13) dans la première zone de séparation (12) est muni de moyens qui permettent de faire basculer ledit ventilateur (13) et de le déplacer à l'horizontale ou à la verticale.

20. Dispositif selon la revendication 6, **caractérisé en ce que**, en dessous de chacune des zones de séparation susmentionnée (12, 22), on prévoit un entonnoir séparé (19, 28).

21. Dispositif selon la revendication 6, **caractérisé en ce qu'**il est muni d'une troisième zone de séparation (31) du même type que celui de la première zone de séparation (12).
